Europäisches Patentamt

European Patent Office

Office européen des brevets

(19)

(11) EP 1 209 921 A2

(12) EUROPÄISCHE PATENTANMELDUNG

(43) Veröffentlichungstag:
29.05.2002 Patentblatt 2002/22

(51) Int Cl.⁷: H04N 9/43

(21) Anmeldenummer: 01125623.7

(22) Anmeldetag: 26.10.2001

(84) Benannte Vertragsstaaten:
AT BE CH CY DE DK ES FI FR GB GR IE IT LI LU
MC NL PT SE TR
Benannte Erstreckungsstaaten:
AL LT LV MK RO SI

(30) Priorität: 27.10.2000 DE 10053301

(71) Anmelder:
• Philips Corporate Intellectual Property GmbH
52064 Aachen (DE)
Benannte Vertragsstaaten:
DE
• Koninklijke Philips Electronics N.V.
5621 BA Eindhoven (NL)
Benannte Vertragsstaaten:
FR GB

(72) Erfinder:
• Weibrecht, Martin,
Philips Corp. Inte. Prop. GmbH
52064 Aachen (DE)
• Quadflieg, Peter, Philips Corp. Inte. Prop. GmbH
52064 Aachen (DE)
• Spekowius, Gerhard, Dr.
52064 Aachen (DE)

(74) Vertreter: Volmer, Georg, Dipl.-Ing. et al
Philips Corporate Intellectual Property GmbH,
Habsburgerallee 11
52064 Aachen (DE)

(54) **Verfahren zur farblichen Wiedergabe eines Graustufenbildes**

(57) Die Erfindung betrifft ein Verfahren zur farblichen Wiedergabe eines Graustufenbildes (1) auf einem Farbmonitor (6), wobei mit Hilfe einer Lookup-Tabelle (4, 5) jeder Graustufe (2) ein bestimmter Ausgangswert (R, G, B) für die Ansteuerung der Elektronenkanonen (8R, 8G, 8B) des Farbmonitors zugeordnet wird. Diese Zuordnung erfolgt so, dass aufeinanderfolgende Graustufen eine geringe Farbabweichung bekommen, die eine Differenzierung der Graustufen für einen menschlichen Betrachter möglich macht, ohne störend zu sein. Dadurch bleibt die Information über die optische Dichte des ursprünglichen Graustufenbildes (1) erhalten, was insbesondere bei der Interpretation medizinischer Bilder wichtig ist. In der Lookup-Tabelle (4, 5) können zusätzlich die speziellen Wiedergabeeigenschaften des Monitors (6) und/oder die Umgebungsbedingungen für eine optimierte Darstellung des Graustufenbildes berücksichtigt werden.

Fig. 2

EP 1 209 921 A2

**Beschreibung**

Die Erfindung betrifft ein Verfahren zur farblichen Wiedergabe eines Graustufenbildes, wobei jeder Graustufe ein Farbwert und eine Helligkeit zugeordnet wird.

Medizinische Graustufenbilder erfordern für eine optimale Darstellung eine möglichst große Anzahl vom menschlichen Betrachter unterscheidbarer Helligkeitsstufen. Die Anzahl unterscheidbarer Graustufen hängt in der Praxis von der erzielbaren Helligkeit und dem Kontrastumfang des Wiedergabemediums ab. Aus diesem Grunde werden für diagnostische Anwendungen in der Regel Filmkopien verwendet, denn Filme besitzen einen Kontrastumfang von bis zu drei Größenordnungen und werden auf Lichtkästen betrachtet, welche Luminanzen bis zu 6000 cd/m$^2$ produzieren.

Durch den Einsatz moderner digitaler Bildgebungsverfahren wie zum Beispiel der Röntgen-Computertomographie oder der Kernspintomographie sowie durch den Einsatz von Bildarchivierungssystemen erfolgt die Wiedergabe von digitalen Bilddaten jedoch in zunehmendem Maße auch auf Monitoren. Häufig werden hierbei herkömmliche Farbmonitore verwendet, wie sie zum Beispiel bei Personalcomputern zu finden sind. Derartige Monitore sind im Verhältnis zu Lichtkästen sehr lichtschwach mit einer Luminanz von typischerweise 100 cd/m$^2$ und erzeugen mithin deutlich weniger unterscheidbare Graustufen.

Aus der US 3,541,233 sowie der FR 2 301 021 sind daher Versuche bekannt, mit einer Falschfarbendarstellung den geringeren Darstellungsumfang von Farbmonitoren zu kompensieren. Bei der Falschfarbendarstellung wird ein Grauton durch eine beliebige, willkürlich ausgewählte Farbe repräsentiert. Die ursprünglich monochromen Bilder erscheinen daher bunt. Da das menschliche Auge eine ungleich höhere Anzahl von Farben als von Graustufen unterscheiden kann, lassen sich durch die Falschfarbendarstellung auch solche Graustufen für den menschlichen Betrachter differenzierbar darstellen, die anhand ihres Helligkeitswertes allein nicht mehr unterscheidbar wären. Die Falschfarbendarstellung scheitert bei der Darstellung medizinischer. Graustufenbilder allerdings daran, dass die optische Dichte der monochromen Bilder Eigenschaften des Gewebes widerspiegelt und somit wesentliche Bedeutung für die Bildinterpretation durch die Ärzte hat. In den durch Falschfarben bunt dargestellten Bilder wird diese Dichteinformation durch die Farben willkürlich verschlüsselt, was eine Interpretation verhindert.

Vor diesem Hintergrund war es Aufgabe der vorliegenden Erfindung, ein Verfahren zur farblichen Wiedergabe eines Graustufenbildes anzugeben, welches eine hohe Anzahl von Graustufen unterscheidbar darstellt und gleichzeitig die Interpretation medizinischer Graustufenbilder erlaubt.

Diese Aufgabe wird durch ein Verfahren mit den Merkmalen des Anspruchs 1 gelöst. Vorteilhafte Ausgestaltungen sind in den Unteransprüchen enthalten.

Bei dem Verfahren zur farblichen Wiedergabe eines Graustufenbildes wird jeder darzustellenden Graustufe ein Farbwert und eine Helligkeit zugeordnet. Der Farbwert kann dabei zum Beispiel durch die Normfarbwertanteile x und y beschrieben werden, und die Helligkeit durch den Normspektralwert Y (vergl. detaillierte Beschreibung unten). Die Zuordnung erfolgt erfindungsgemäß so, dass zwischen den ursprünglichen Graustufen und der Helligkeit eine monotone Zuordnung besteht, und dass die zugeordneten Farbwerte aus der Umgebung einer vorgegebenen Referenzfarbe gewählt werden.

Die monotone Zuordnung zwischen Graustufen und Helligkeit bedeutet, dass eine dunklere Graustufe im Vergleich zu einer helleren Graustufe mit einer geringeren oder allenfalls gleich großen Helligkeit dargestellt wird. Bei einer Negativdarstellung kann die Zuordnung auch umgekehrt verlaufen. Die bei medizinischen Aufnahmen in den Graustufen enthaltene Information über die optische Dichte des Gewebes bleibt somit in der Helligkeit des transformierten Bildes im Wesentlichen erhalten. Vorzugsweise ist die Zuordnung zwischen Graustufen und Helligkeit streng monoton, das heißt, dass verschiedenen Graustufen auch verschiedene Helligkeiten zugeordnet sind.

Weiterhin werden die einer Graustufe zugeordneten Farbwerte aus der Umgebung einer vorgegebenen Referenzfarbe gewählt. Die Umgebung ist dabei verhältnismäßig klein zu wählen, was sich bei Zugrundelegung eines bestimmten farbmetrischen Systems entsprechend parametrisieren lässt. Zum Beispiel kann bei Verwendung von Normfarbwertanteilen (CIE-System nach DIN 5033) festgelegt sein, dass die zugeordneten Normfarbwertanteile x, y absolut um etwa 0.01 bzw. relativ um maximal 10 %, vorzugsweise maximal 3 %, besonders bevorzugt maximal 1.5 % von den Normfarbwertanteilen $x_R$, $y_R$ der Referenzfarbe abweichen dürfen.

Durch die oben erläuterte Zuordnungsvorschrift wird einerseits die in den Graustufen enthaltene Information über die optische Dichte von Gewebe in medizinischen Bildern beibehalten, andererseits wird die Unterscheidung benachbarter Graustufen durch eine kontrollierte Beimischung von geringen, gerade noch wahrnehmbaren Farbabweichungen zwischen den Graustufen unterstützt. Im Gegensatz zur bekannten Falschfarbendarstellung bewahrt die Beimischung geringer Farbabweichungen den Gesamteindruck des Bildes und mithin die Interpretierbarkeit der Bilddaten im Sinne einer optischen Dichte. Ein Mediziner kann die Bilder also gemäß seiner Erfahrung lesen und wird zusätzlich in der Unterscheidung kleinster Graustufenabweichungen unterstützt.

Die Referenzfarbe, in deren Nähe die den Graustufen zuzuordnenden Farbwerte gewählt werden, ist vorzugsweise Weiß (bzw. je nach Helligkeit Grau). Hierdurch wird erreicht, dass das Bild im Wesentlichen ein Graustufenbild bleibt, wobei die einzelnen Graustufen lediglich kleine Farbstiche zur besseren Unterscheidbarkeit aufweisen.

Die Zuordnung zwischen Graustufen des ursprünglichen Graustufenbildes und Farbwerten erfolgt vorzugsweise so, dass zwei aufeinanderfolgenden Graustufen unterschiedliche Farbwerte zugeordnet werden. Hierdurch wird sichergestellt, dass die beiden Graustufen aufgrund der Farbwerte für den menschlichen Betrachter unterscheidbar werden. Diesem Zweck entsprechend sollte der Abstand zwischen den zugeordneten Farbwerten hinreichend groß gewählt werden, so dass sie für das Auge gut unterscheidbar sind. Wenn indes zwei benachbarte Graustufen bereits ohne Veränderung für den menschlichen Betrachter sicher unterscheidbar sind, kann auf die Zuordnung verschiedener Farben verzichtet werden, um Irritationen durch eine Farbgebung möglichst zu vermeiden.

Die Zuordnung zwischen Graustufen des ursprünglichen Graustufenbildes und Farbwerten kann insbesondere auch bijektiv erfolgen. Dabei ist jeder Graustufe umkehrbar eindeutig ein Farbwert zugeordnet, so dass die in den Graustufen enthaltene Information in jedem Falle ohne Verlust ein zweites Mal in den Farbwerten enthalten ist. Eine solche bijektive Zuordnung verhindert ferner, dass zwei unterschiedlichen Graustufen derselbe Farbwert zugeordnet wird, was die Gefahr beinhalten würde, dass diese Graustufen verwechselt werden könnten.

Gemäß einer anderen Weiterbildung des Verfahrens sind die n vorhandenen Graustufen in aufsteigender Reihenfolge einer sich wiederholenden Folge von $m \leq n$ unterschiedlichen Farbwerten $((x_1, y_1), ... (x_m, y_m))$ zugeordnet. Wenn m = n ist, ergibt sich die zuvor beschriebene bijektive Zuordnung zwischen Graustufen und Farbwerten. Ist dagegen m < n, so gibt es Graustufen, denen derselbe Farbwert - zum Beispiel $(x_1, y_1)$ - zugeordnet ist. Allerdings sind diese Graustufen dann aufgrund der Zuordnungsvorschrift um m zwischenliegende Graustufen getrennt. Bei hinreichend großer Wahl von m kann daher die Gefahr ausgeschlossen werden, dass die demselben Farbwert zugeordneten Graustufen miteinander verwechselt werden könnten. Die Verwendung einer sich wiederholenden Folge von m unterschiedlichen Farbwerten zur Differenzierung der Graustufen hat den Vorteil, dass die Willkür bei der Zuordnung zwischen Graustufen und Farbwerten durch die einmal festgelegte Ordnung der m Farbwerte der Folge reduziert wird. Zwei benachbarte Farbwerte $(x_i, y_i)$ und $(x_{i+1}, y_{i+1})$ codieren somit auf jedem Graustufenniveau des Bildes dieselbe Ordnung (kleiner oder größer) der ihnen zugeordneten Graustufen. Wenn also beispielsweise in einer dunklen Region des Bildes ein rötlicher und ein bläulicher Bereich nebeneinander liegen und der rötliche Bereich einem um eine Stufe dunkleren Grauwert $G_1$ als der bläuliche Bereich entspricht, dann entspricht auch in einer hellerer Region des Bildes ein rötlicher Bereich einem um eine Stufe dunkleren Grauwert $G_2$ als ein bläulicher Bereich, wobei natürlich aufgrund des unterschiedlichen Ausgangsniveaus $G_2$ sehr viel heller als $G_1$ ist.

Die farbliche Wiedergabe des Graustufenbildes kann grundsätzlich auf allen hierfür geeigneten Medien erfolgen, zum Beispiel auch in einem Mehrfarbendruck. Vorteilhafterweise findet die Wiedergabe jedoch auf einem Farbmonitor statt, wobei vorzugsweise die Zuordnung zwischen Graustufen einerseits und Farbwerten sowie Helligkeit andererseits dem zur Verfügung stehenden dynamischen Bereich des Farbmonitors angepasst ist. Auf diese Weise kann bei der zunehmend anzutreffenden Wiedergabe medizinischer Bilder auf Farbmonitoren eine optimale Ausnutzung der Ressource erreicht werden, wobei das Bild gleichzeitig in medizinischer Hinsicht interpretierbar bleibt bzw. wird.

Bei der Wiedergabe des farblichen Bildes auf einem Farbmonitor wird die Zuordnungsvorschrift zwischen den Graustufen des ursprünglichen Graustufenbildes und der Ansteuerung der Primärfarben des Farbmonitors vorzugsweise in einer Lookup-Tabelle abgelegt. Eine solche Lookup-Tabelle hat den Vorteil, dass sie die einfache Implementation beliebiger Zuordnungsvorschriften erlaubt, welche zum Beispiel experimentell und/oder theoretisch bestimmt sein können, und dass ihre Benutzung eine sehr schnelle Transformation erlaubt.

Bei der Festlegung der Zuordnungsvorschrift für eine Lookup-Tabelle kann zusätzlich auch der Einfluss der Umgebungshelligkeit auf die Darstellungsmöglichkeiten des Monitors berücksichtigt werden. Das heißt, dass je nach gemessener Umgebungshelligkeit eine andere Zuordnungsvorschrift zwischen Graustufen und Primärfarben zur Anwendung kommen kann, wobei diese Zuordnungsvorschriften in ihrer Abhängigkeit von der Umgebungshelligkeit in der Lookup-Tabelle abgelegt sind.

Die Erfindung betrifft ferner eine Anordnung zur farblichen Wiedergabe eines Graustufenbildes, enthaltend eine Transformationseinheit, in welcher jeder Graustufe des Graustufenbildes ein Farbwert und eine Helligkeit zugeordnet wird. Die Transformationseinheit ist dabei so eingerichtet, dass sie ein Verfahren der oben erläuterten Art ausführen kann. Das heißt, dass in der Transformationseinheit eine monotone Zuordnung zwischen Graustufen und Helligkeit vorgenommen wird, und dass die Farbwerte aus der Umgebung einer vorgegebenen Referenzfarbe gewählt werden. Die Transformationseinheit kann ferner so eingerichtet sein, dass sie die oben erläuterten Varianten des Verfahrens realisiert.

Die Anordnung kann insbesondere einen Farbmonitor zur farblichen Wiedergabe des Graustufenbildes aufweisen. Eine solche Anordnung ist dann dazu geeignet, medizinische Graustufenbilder auf einem herkömmlichen Farbmonitor darzustellen, wobei die in den Graustufen enthaltene Information trotz eines begrenzten dynamischen Bereiches des Farbmonitors vollständig dargestellt werden kann und eine ärztliche Interpretation des Bildes erlaubt. Als Quelle für ein medizinisches Graustufenbild kommen insbesondere Röntgengeräte, Computertomographen, Magnetresonanztomographen und/oder Ultraschallgeräte in Frage.

Im Folgenden wird die Erfindung mit Hilfe der Figuren beispielhaft erläutert. Es zeigt:

Fig. 1    schematisch eine Anordnung zur farblichen Wiedergabe eines Graustufenbildes auf einem Farbmonitor;

Fig. 2    schematisch eine Zuordnungsvorschrift zwischen Graustufen und Farbwerten in einem Farbwertediagramm.

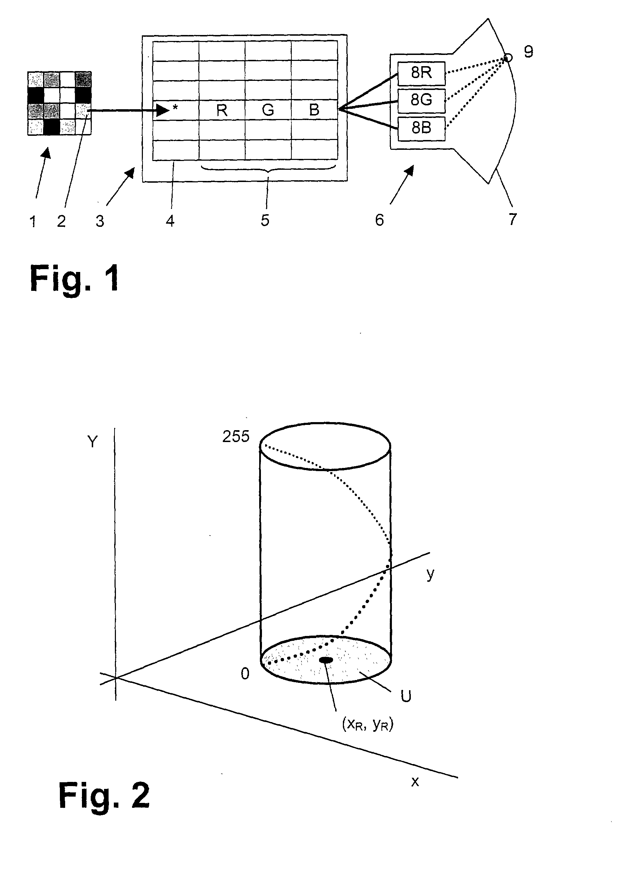

Figur 1 zeigt schematisch die Elemente, welche zur Darstellung eines Graustufenbildes 1 auf einem Farbmonitor 6 erforderlich sind. Der Farbmonitor 6 ist im Beispiel eine Kathodenstrahlröhre, grundsätzlich könnte es sich jedoch um jedes hierfür geeignete Displaysystem wie eine Flüssigkristallanzeige (LCD), ein PDP (Plasma Display Panel) oder dergleichen handeln. Die Pixel 2 des Graustufenbildes 1 sind in diskrete, digital codierte Graustufen eingeteilt, wobei typischerweise 256 verschiedene Graustufen unterschieden werden können.

In der Transformationseinheit 3, welche die erfindungsgemäße Umsetzung der Graustufen des Bildes 1 in Ansteuerungssignale (Digital Driving Levels DDL) für den Farbmonitor 6 vornimmt, sind die 256 verschiedenen möglichen Graustufen in der Spalte 4 einer Lookup-Tabelle mit 256 Zeilen tabelliert. Die Lookup-Tabelle enthält ferner drei Spalten 5, in denen die den Graustufen der ersten Spalte 4 jeweils zugeordneten Ansteuerungssignale R, G und B für die drei Elektronenkanonen 8R, 8G und 8B des Farbmonitors 6 enthalten sind.

Wenn somit ein bestimmtes Pixel 2 des Graustufenbildes 1 auf dem Farbmonitor 6 dargestellt werden soll, wird zunächst die Graustufe des Pixels bestimmt und die zugehörige Zeile der Lookup-Tabelle 4, 5 aufgesucht. Aus dieser Zeile können dann die Ansteuerungssignale für den Farbmonitor 6 ausgelesen und dessen Elektronenkanonen zugeführt werden. Die Elektronenkanonen 8R, 8G, 8B bringen dann in bekannter Weise je einen zugehörigen Leuchtpunkt auf dem Bildschirm 7 des Farbmonitors 6 entsprechend der Stärke ihres Ansteuerungssignales zum Leuchten, wobei alle drei Leuchtpunkte zusammen ein farbiges Pixel 9 des Farbmonitors bilden.

Die ohne zusätzliche Maßnahmen aufgrund des Helligkeits- und Kontrastumfanges des Farbmonitors 6 auf dem Bildschirm 7 darstellbaren Graustufen sind begrenzt und weniger als zur verlustfreien Darstellung des Graustufenbildes 1 notwendig wären. Neben diesem grundsätzlichen Problem, dass der lichtschwache Bildschirm 6 nur eine geringe Anzahl von unterscheidbaren Graustufen erzeugt, gibt es bei den üblichen Verfahren noch Verluste der Bildqualität infolge praktischer Einschränkungen. In herkömmlichen Bildwiedergabesystemen werden die Farbkanäle, mit welchen die Primärfarben des Farbmonitors (im Allgemeinen Rot, Grün und Blau) angesteuert werden, in 256 Stufen (8 Bit) quantisiert. Zur Darstellung eines Graustufenbildes wird in der Regel jeder der Kanäle mit dem gleichen Digitalsignal angesteuert. Dies führt zu den nachfolgend erläuterten Problemen.

Zum einen zeigt es sich, dass die intrinsische Grautonverteilung eines Monitors nicht optimal an die Grautonempfindlichkeit des menschlichen Beobachters angepasst ist. Gerade in Hinblick auf die prinzipiell niedrige Anzahl unterscheidbarer Graustufen bei Farbmonitoren ist eine solche Anpassung jedoch von besonderer Bedeutung. Die Anpassung soll üblicherweise durch sogenannte LUT-Operationen (LUT: Lookup-Tabelle) erreicht werden. Hierbei wird der digitale Grautonwert eines Bildpunktes mit Hilfe einer Lookup-Tabelle auf einen Digitalwert abgebildet, welcher zu dem gewünschten Grauton auf dem Bildschirm führen soll. Bei einem Farbsystem gibt es wie oben erläutert für jeden Farbkanal eine Spalte in der Lookup-Tabelle. Wenn bei Grautonbildern auf jeden Farbkanal des Displaysystems der gleiche digitale Grauwert gelegt wird, kann diese Zuordnungsvorschrift auch durch eine Lookup-Tabelle mit einer einzigen Spalte beschrieben werden, deren Ausgangswerte in gleicher Weise auf alle Farbkanäle des Monitors angewendet werden. Damit ergibt sich dann jedoch das Problem, dass die übliche Tabelle 256 Einträge hat, welche aus nur 256 verschiedenen Ausgangswerten besetzt werden können (8 Bit-zu-8 Bit Abbildung). Um eine nichtlineare Abbildung zu erreichen, welche zur Korrektur der intrinsischen Grautonverteilung des Displaysystems benötigt wird, müssen daher manche der 256 Ausgangswerte mehrfach belegt werden, während andere überhaupt nicht verwendet werden. Folglich tritt ein Verlust an Graustufen im Ausgangssignal auf. In der nachfolgenden Tabelle treten beispielsweise die Werte 1 und 2 nicht mehr im Ausgangssignal auf, wohingegen 0, 3 und 255 doppelt verwendet werden.

| In | Out Red | Out Green | Out Blue |
|-----|---------|-----------|----------|
| 0 | 0 | 0 | 0 |
| 1 | 0 | 0 | 0 |
| 2 | 3 | 3 | 3 |
| 3 | 3 | 3 | 3 |
| ... | ... | ... | ... |
| 254 | 255 | 255 | 255 |
| 255 | 255 | 255 | 255 |

Aus der WO 00/36825 ist diesbezüglich für einen speziellen Schwarz-Weiß-Monitor mit drei separaten Elektronenkanonen ein Verfahren bekannt, mit Hilfe dessen trotz einer nichtlinearen Abbildung eine verlustfreie Darstellung aller Graustufen erreicht werden kann.

Ein weiteres Problem bei der Darstellung von Graustufenbildern auf Farbmonitoren resultiert aus den physiologischen Grundlagen der Farbwahrnehmung durch einen menschlichen Betrachter. Aus der Theorie der Farbwahrnehmung ist bekannt, dass sich der Helligkeitseindruck einer dargebotenen Farbe additiv aus den Luminanzbeiträgen der vom Monitor verwendeten Primärfarben ergibt. Der Farbeindruck wird dagegen durch das Verhältnis der Luminanzbeiträge der Primärfarben bestimmt. Um also für unterschiedliche Helligkeiten zu dem gleichen Farbeindruck zu gelangen, müssen die Luminanzen der Primärfarben in konstantem Verhältnis zueinander gehalten werden. Soll demnach bei gleichem Farbeindruck die Helligkeit beispielsweise um 10% erhöht werden, so muss der Luminanzbeitrag jeder Primärfarbe um 10% erhöht werden. In den üblichen LUT-Verfahren werden allerdings nicht die tatsächlichen Luminanzbeiträge der Primärfarben, sondern vielmehr die digitalen LUT-Ausgangswerte der Farbkanäle in identischer Weise erhöht (vgl. obige Tabelle). Da die Luminanzbeiträge der Farbkanäle eines Monitors in der Regel jedoch unterschiedliche Abhängigkeiten von den digitalen LUT-Ausgangswerten besitzen, variiert das Verhältnis der Primärfarben über den dynamischen Bereich des Monitors in unkontrollierter Weise. So ist es zum Beispiel möglich, dass ein Monitor, der für ein helles Grau einen Blaustich aufweist, bei einem dunkleren Grau einen rötlichen Farbton besitzt.

Bei dem erfindungsgemäßen Verfahren werden die oben erläuterten Probleme durch eine geeignete Belegung der Lookup-Tabelle 5 in der Transformationseinheit 3 gelöst. Die Berechnung der Einträge in die Lookup-Tabelle 5 wird nachfolgend detailliert beschrieben.

Zunächst wird eine Kalibration des Displaysystems durchgeführt, welche für jeden Farbkanal den Zusammenhang zwischen den digitalen Ausgangswerten der Lookup-Tabelle 5 und der erzeugten Luminanz im zugehörigen Leuchtpunkt des Pixels 9 ermittelt. Die Kalibration kann hierbei durch vollständige Messung aller Digitalwerte oder durch ein Modell erfolgen, für welches geeignete Parameter bestimmt werden. Die Auswertung der Kalibrationsmessung beziehungsweise des Modells erfolgt ähnlich wie in der WO 00/36825 beschrieben, das heißt, die Gesamtluminanz setzt sich additiv aus den Beiträgen der einzelnen Farbkanäle zusammen, wobei Sättigungseffekte berücksichtigt werden können. Umgebungslichteffekte können ebenfalls durch Verwendung eines geeigneten Umgebungslichtsensors einbezogen werden. Aus der Kalibration sind dann die minimale und maximale Luminanz, welche das Displaysystem 6 unter den aktuellen Bedingungen produzieren kann, sowie die Kurvenverläufe der einzelnen Kanäle bekannt. Außerdem werden in den Kalibrationsdaten noch die farbmetrischen Koordinaten $(x_r, y_r)$, $(x_g, y_g)$ und $(x_b, y_b)$ der Farbkanäle aufgenommen. Aus der Kenntnis des Luminanzbereichs kann eine gewünschte, optimale Grautonfunktion bestimmt werden, was zum Beispiel nach dem amerikanischen DICOM-Standard erfolgen kann.

Derartige Grautonfunktionen spezifizieren allerdings nur die Luminanz, welche vom Monitor erzeugt werden soll. Es werden jedoch keinerlei Angaben über die Farbpunkte der Graustufen gemacht. Das erfindungsgemäße Verfahren nutzt diese Freiheit, um für jeden Grauwert zusätzlich einen geeigneten Farbpunkt zu definieren. So kann beispielsweise eine zwischen zwei oder mehr Farbpunkten alternierende Grautonfolge vorgesehen werden, wobei die Farbabweichungen so gering gehalten werden, dass keine störenden Farbeffekte entstehen und dennoch die Unterscheidung benachbarter Graustufen unterstützt wird.

In Figur 2 ist eine solche Zuordnungsvorschrift graphisch im System der Normfarbwertanteile x, y und der Helligkeit Y (Definition siehe unten) veranschaulicht. Während beim Stand der Technik eine bestimmte Referenzfarbe $(x_R, y_R)$ - typischerweise Weiß/Grau - ausgewählt und für die Wiedergabe aller ursprünglichen Graustufen 0 bis 255 beibehalten wird, werden erfindungsgemäß die Graustufen 0 bis 255 in einer verhältnismäßig kleinen Umgebung U um die Referenzfarbe $(x_R, y_R)$ herum verteilt. Die Begrenzung auf eine kleine Umgebung U stellt sicher, dass durch die Farbgebung die Grauwertinformation nicht in störender Weise überlagert wird. Vorzugsweise erfolgt die Zuordnung zwischen den Graustufen 0 bis 255 und den Farbwerten (x, y) nach einer gewissen Systematik, zum Beispiel wie in Figur 2 dargestellt mit wachsenden Graustufen entlang einer spiralförmig verlaufenden Linie. Dabei wird zwischen den Graustufen und der Helligkeit Y ein monotoner Zusammenhang zugrunde gelegt, so dass die sich ergebende Kurve stets steigend (oder allenfalls stellenweise horizontal) verläuft.

Ist die Grautonfolge in geeigneter Weise vollständig spezifiziert, so können die zu ihrer Umsetzung benötigten Beiträge der einzelnen Farbkanäle des Monitors berechnet werden. Die theoretischen Grundlagen für diese Berechnung beruhen auf der Farbmetrik. Gemäß der farbmetrischen Theorie wird das menschliche Auge durch drei verschiedene Farbrezeptoren modelliert. Zwei optische Reize werden als gleich empfunden, wenn sie die drei Farbrezeptoren in gleicher Weise anregen. Dies gilt insbesondere auch dann, wenn die Reize völlig verschiedene spektrale Verteilungen besitzen. Mit Hilfe geeigneter spektraler Wichtungsfunktionen, den sog. Spektralwertkurven, lassen sich durch Integration des Emissionsspektrums eines optischen Reizes drei Kennzahlen ermitteln, welche die Farbempfindung genau definieren. Wurden die Kurven für ein Basissystem von Primärfarben durch perzeptionelle Versuche ermittelt, so lässt sich daraus jedes andere Basissystem durch Linearkombination ableiten. Auf diese Weise gelangt man zu den sog. Normspektralkurven $\bar{x}$, $\bar{y}$ und $\bar{z}$. Diese zeichnen sich u.a. dadurch aus, dass $\bar{y}$ der spektrale Hellempfindlichkeitsgrad ist. Wird die spektrale Verteilung eines Reizes mit jeweils $\bar{x}$, $\bar{y}$ und $\bar{z}$ gewichtet und integriert, so ergeben sich die sog. Normspektralwerte X, Y und Z. Da $\bar{y}$ der spektrale Hellempfindlichkeitsgrad ist, ist das Integral Y bei geeigneter Normierung gleich der Luminanz des Reizes.

Um zu einer Trennung von Helligkeits- und Farbempfindung zu gelangen, werden die Normspektralwerte auf die Summe von X, Y und Z normiert. Die normierten Größen

$$x = X / (X+Y+Z)$$

und

$$y = Y / (X+Y+Z)$$

heißen Normfarbwertanteile. Die Normfarbwertanteile x und y definieren einen Farbpunkt unabhängig von ihrer Helligkeit. Die dritte Komponente,

$$z = Z / (X+Y+Z),$$

ist mit Hilfe der Beziehung x+y+z = 1 eindeutig aus x und y ableitbar und zur Farbdefinition nicht mehr notwendig. So werden die roten, grünen und blauen Phosphore einer Farbfernsehröhre durch ihre Normfarbwertanteile $(x_r, y_r)$, $(x_g, y_g)$ und $(x_b, y_b)$ spezifiziert. Bei Kenntnis der Normfarbwertanteile sowie der Luminanzbeiträge $(Y_R, Y_G, Y_B)$ der Primärfarben eines Monitors lassen sich die Normspektralwerte des dargestellten Farbreizes durch die folgende Matrizengleichung berechnen:

$$\begin{pmatrix} X \\ Y \\ Z \end{pmatrix} = \begin{pmatrix} a_R & a_G & a_B \\ 1 & 1 & 1 \\ b_R & b_G & b_B \end{pmatrix} \begin{pmatrix} Y_R \\ Y_G \\ Y_B \end{pmatrix}$$

mit $a=x/y$ und $b = z/y=(1-x-y)/y$.

Durch Invertierung der Matrix lassen sich umgekehrt die Luminanzbeiträge der Primärfarben des Monitors berechnen, welche benötigt werden, um einen vorgegebenen Farbreiz (YT, xT, yT) bzw. (XT, YT, ZT) zu realisieren:

$$\begin{pmatrix} Y_R \\ Y_G \\ Y_B \end{pmatrix} = \frac{1}{N} \begin{pmatrix} (b_B - b_G) & (a_B b_G - a_G b_B) & (a_G - a_B) \\ (b_R - b_B) & (a_R b_B - a_B b_R) & (a_B - a_R) \\ (b_G - b_R) & (a_G b_R - a_R b_G) & (a_R - a_G) \end{pmatrix} \begin{pmatrix} X_T \\ Y_T \\ Z_T \end{pmatrix},$$

$$N = a_R b_B + a_G b_R + a_B b_G - a_R b_G - a_G b_B - a_B b_R.$$

Diese Gleichung stellt den Zusammenhang zwischen dem gewünschten Farbsignal und den benötigten Luminanzbeiträgen der Primärfarben dar. Wird ein Farbreiz vorgegeben, so bestimmen sich aus dieser Gleichung die Beiträge der einzelnen Farbkanäle.

Nachdem auf diese Weise die jeweiligen Luminanzbeiträge der Farbkanäle für die gewünschte Grautonfunktion ermittelt sind, können mit Hilfe der Kalibrationsdaten der Farbkanäle die entsprechenden LUT-Ausgangswerte bestimmt werden. Hierbei handelt es sich um ein Suchverfahren, welches denjenigen LUT-Ausgangswert ermittelt, für welchen die realisierte Luminanz möglichst nah an der für diesen Kanal jeweils geforderten Luminanz liegt. Nach diesem Schritt liegen für jeden Kanal individuell ermittelte LUT-Werte vor. Diese können nun für alle Kanäle gemeinsam betrachtet und in einem Optimierungsschritt nach einem geeigneten Fehlerkriterium verbessert werden. So können beispielsweise die gefundenen LUT-Werte für jede Graustufe in vorgegebenen Grenzen permutiert werden, so dass die resultierende Gesamtluminanz näher an der geforderten Luminanz liegt. Diese Optimierung wird in der Regel die Genauigkeit des eingestellten Farbpunktes verringern, was sich jedoch in der Praxis als unproblematisch herausgestellt hat. Nachfolgend ist eine so ermittelte Lookup-Tabelle mit 256 Graustufen für ein 8 Bit System teilweise abgedruckt. An dieser Tabelle ist besonders zu beachten, dass keine Duplizierung von Einträgen vorliegt, das heißt, dass die Tabelle trotz der Limitierung der drei Farbkanäle auf 8 Bit 256 verschiedene Grauwerte produziert. Den Daten liegt ein herkömmlicher Farbmonitor mit folgenden Farbpunkten zugrunde: rot: (0.619, 0.341); grün: (0.296, 0.589); blau: (0.144, 0.06). Die LUT realisiert auf dem Displaysystem den DICOM Standard, wobei zwischen benachbarten Graustufen eine Farbdifferenz von $(\delta x, \delta y) = (0.01, 0.01)$ erzeugt wird.

| In | Out Red | Out Green | Out Blue |
|---|---|---|---|
| 0 | 0 | 0 | 0 |
| 1 | 24 | 24 | 32 |
| 2 | 19 | 28 | 39 |
| 3 | 30 | 30 | 37 |
| 4 | 26 | 34 | 41 |
| 5 | 33 | 35 | 40 |
| 6 | 32 | 37 | 45 |
| 7 | 34 | 39 | 44 |
| 8 | 33 | 41 | 47 |
| 9 | 39 | 41 | 47 |
| 10 | 38 | 43 | 48 |
| ... | ... | ... | ... |
| 241 | 239 | 239 | 239 |
| 242 | 233 | 241 | 249 |
| 243 | 242 | 241 | 242 |
| 244 | 237 | 243 | 250 |
| 245 | 245 | 243 | 244 |
| 246 | 239 | 245 | 254 |
| 247 | 245 | 246 | 246 |
| 248 | 240 | 248 | 255 |
| 249 | 249 | 248 | 247 |
| 250 | 244 | 250 | 255 |
| 251 | 249 | 251 | 249 |
| 252 | 249 | 252 | 254 |
| 253 | 254 | 252 | 254 |
| 254 | 253 | 254 | 254 |
| 255 | 255 | 255 | 255 |

Mit dem erfindungsgemäßen Verfahren ist insbesondere eine optimierte Darstellung von medizinischen Grauwertbildern auf herkömmlichen Farbdisplaysystemen möglich durch:
eine auf die Wiedergabeeigenschaften des Display-Systems abgestimmte Lookup-Tabellen Berechnung (Kalibration, Einfluss des Umgebungslicht);

- eine Kontrolle der Bildwiedergabe im Displaysystem in Hinblick auf Luminanz UND Farbpunkt;
- eine kontrollierte Beimischung von Farbabweichungen zur Verbesserung der Unterscheidbarkeit verschiedener Graustufen;

- eine Vermeidung der Graustufenverluste herkömmlicher LUT-Verfahren, welche aus der Beschränkung der Grafikkarten auf 8 Bit Ausgangswerte resultieren.

Da herkömmliche Komponenten verwendet werden können, wird zudem der Einsatz teurer, speziell für die Medizintechnik entwickelter Grafikkarten vermieden.

**Patentansprüche**

1. Verfahren zur farblichen Wiedergabe eines Graustufenbildes, wobei jeder Graustufe ein Farbwert (x, y) und eine Helligkeit (Y) zugeordnet wird,
   **dadurch gekennzeichnet,**
   **dass** die Zuordnung zwischen Graustufen und Helligkeit monoton verläuft und dass die zugeordneten Farbwerte aus der Umgebung (U) einer vorgegebenen Referenzfarbe ($x_R$, $y_R$) gewählt werden.

2. Verfahren nach Anspruch 1,
   **dadurch gekennzeichnet,**
   **dass** die Referenzfarbe ($x_R$, $y_R$) Weiß ist.

3. Verfahren nach einem der Ansprüche 1 oder 2,
   **dadurch gekennzeichnet,**
   **dass** je zwei aufeinanderfolgenden Graustufen unterschiedliche Farbwerte zugeordnet werden.

4. Verfahren nach mindestens einem der Ansprüche 1 bis 3,
   **dadurch gekennzeichnet,**
   **dass** die Zuordnung zwischen Graustufen und Farbwerten bijektiv ist.

5. Verfahren nach mindestens einem der Ansprüche 1 bis 4,
   **dadurch gekennzeichnet,**
   **dass** die in aufsteigender Reihenfolge geordneten n Graustufen einer sich wiederholenden Folge von $m \leq n$ unterschiedlichen Farbwerten (($x_1$, $y_1$), ... ($x_m$, $y_m$)) zugeordnet werden.

6. Verfahren nach mindestens einem der Ansprüche 1 bis 5,
   **dadurch gekennzeichnet,**
   **dass** die farbliche Wiedergabe des Graustufenbildes auf einem Farbmonitor (6) erfolgt, wobei die Zuordnung zwischen Graustufen einerseits und Farbwerten (x, y) sowie Helligkeit (Y) andererseits dem dynamischen Bereich des Monitors angepasst ist.

7. Verfahren nach Anspruch 6,
   **dadurch gekennzeichnet,**
   **dass** die Zuordnungsvorschrift zwischen den Graustufen und der Ansteuerung der Primärfarben des Farbmonitors (6) in einer Lookup-Tabelle (4, 5) abgelegt ist.

8. Verfahren nach Anspruch 7,
   **dadurch gekennzeichnet,**
   **dass** die Lookup-Tabelle (4, 5) auch den Einfluss der Umgebungshelligkeit berücksichtigt.

9. Anordnung zur farblichen Wiedergabe eines Graustufenbildes, enthaltend eine Transformationseinheit (3), vermöge welcher jeder Graustufe (2) ein Farbwert (x, y) und eine Helligkeit (Y) der Wiedergabe zugeordnet wird,
   **dadurch gekennzeichnet,**
   **dass** die Transformationseinheit so eingerichtet ist, dass sie ein Verfahren nach einem der Ansprüche 1 bis 8 ausführen kann.

10. Anordnung nach Anspruch 9,
    **dadurch gekennzeichnet,**
    **dass** sie einen Farbmonitor (6) zur farblichen Wiedergabe des Graustufenbildes aufweist und dass die Transformationseinheit den Graustufen die Ansteuerung der Primärfarben (R, G, B) des Farbmonitors zuordnet.

## Fig. 1

## Fig. 2